(19) Europäisches Patentamt

European Patent Office

Office européen des brevets

(11) Veröffentlichungsnummer : **0 323 548 B1**

(12) **EUROPÄISCHE PATENTSCHRIFT**

(45) Veröffentlichungstag der Patentschrift :
03.04.91 Patentblatt 91/14

(51) Int. Cl.$^5$ : **B29C 49/20**

(21) Anmeldenummer : **88115267.2**

(22) Anmeldetag : **17.09.88**

(54) **Verfahren zur Herstellung eines Kunststoffbehälters durch Blasformen und Vorrichtung für die Durchführung des Verfahrens.**

(30) Priorität : **18.12.87 DE 3742993**

(43) Veröffentlichungstag der Anmeldung :
**12.07.89 Patentblatt 89/28**

(45) Bekanntmachung des Hinweises auf die
Patenterteilung :
**03.04.91 Patentblatt 91/14**

(84) Benannte Vertragsstaaten :
**AT BE CH ES FR GB GR IT LI LU NL SE**

(56) Entgegenhaltungen :
**DE-A- 1 479 612**
**DE-A- 2 112 835**
**DE-A- 2 326 477**
**US-A- 4 323 411**

(73) Patentinhaber : **SOTRALENTZ S.A.**
**24, Rue du Professeur-Froehlich**
**F-67320 Drulingen (FR)**

(72) Erfinder : **Pfeiffer, Pierre**
**29, Rue d'Ottwiller**
**F-67 320 Drulingen (FR)**
Erfinder : **Sigwalt, Paul**
**22, Rue de Phalsbourg**
**F-67 320 Drulingen (FR)**
Erfinder : **Cheval, Benoit**
**31, Rue Clémenceau**
**F-67 700 Saverne (FR)**

(74) Vertreter : **Andrejewski, Walter et al**
**Patentanwälte Andrejewski, Honke & Partner**
**Postfach 10 02 54 Theaterplatz 3**
**W-4300 Essen 1 (DE)**

## Beschreibung

Die Erfindung bezieht sich gattungsgemäß auf ein Verfahren zur Herstellung eines Kunststoffbehälters durch Blasformen eines Schlauchabschnittes aus thermoplastifiziertem Kunststoff, – wobei ein Schlauch in eine geteilte, geöffnete Blasform eingeführt, die Blasform geschlossen und in den in der Blasform abgequetschten Schlauchabschnitt Druckluft eingeführt wird, wobei fernerhin in die geöffnete Blasform, die geeignete Aufnahme aufweist, zumindest ein einteiliger Faßring aus thermoplastischem Kunststoff, der im Wege des Spritzgießens mit Verwindungstoleranzen behaftet hergestellt wurde, eingelegt wird und dieser bei der Blasformgebung des Behältermantels mit diesem form- und/oder stoffschlüssig verbunden wird. Die Erfindung bezieht sich fernerhin auf eine Vorrichtung zur Durchführung eines solchen Verfahrens. Solch ein Verfahren und solch eine Vorrichtung sind aus der DE-A-2 326 477 bekannt.

Im Rahmen der bekannten Maßnahmen von denen die Erfindung ausgeht, ergibt sich ein Problem: Die Faßringe, die mit dem Behältermantel des fertigen Behälters vereinigt sind, weisen in der Ringebene nach statistischer Verteilung Toleranzen auf, die als Verwindungstoleranzen bezeichnet werden und einige Millimeter ausmachen können. Das stört und kann zu Ausschuß führen, soweit ein Faßring zugleich einer abdichtenden Verschlußeinrichtung angehört, die aus einem Gegenring an einem zugeordneten Faßdeckel und einem Klemmring oder dergleichen besteht. Infolge der beschriebenen Verwindungstoleranzen dichtet eine solche Verschlußeinrichtung nicht mehr ausreichend ab. Um diesem Nachteil zu begegnen, ist es üblich, die im Wege des Spritzgießens hergestellten Faßringe sorgfältig zu sortieren und nur ausreichend ebene, von Verwindungstoleranzen freie Faßringe in den Herstellungsprozeß der Kunststoffbehälter einzuführen. Das ist aufwendig. Im übrigen treten selbst dann störende Toleranzen auf, wenn die Faßringe in der beschriebenen Weise sorgfältig ausgewählt wurden. Es versteht sich, daß die Faßringe auch Rundheitstoleranzen aufweisen ; auch insoweit sortiert man aus.

Der Erfindung liegt die Aufgabe zugrunde, das gattungsgemäße Verfahren so zu führen, daß die mit dem Behältermantel der fertigen Behälter vereinigten Faßringe störende Toleranzen nicht mehr aufweisen. Der Erfindung liegt fernerhin die Aufgabe zugrunde, eine Vorrichtung anzugeben, die für die Durchführung eines solchen Verfahrens besonders geeignet ist.

Zur Lösung dieser Aufgabe lehrt die Erfindung, daß ein unsortierter Faßring, der einen Außenbund aufweist, dem Verfahren zugeführt und in eine Vorwärmstation eingeführt wird, in der er spannungsfrei gemacht und gleichzeitig auf seine vorgegebene Ringebene eingerichtet wird, und daß der spannungsfreie und eingerichtete Faßring an seinem Außenbund mit einem Manipulator ergriffen wird, dessen Greifer in einer der Ringebene entsprechenden Ebene liegen, und daß der Manipulator den Faßring in die geöffnete Blasform einführt sowie an in der Blasform verschiebbare Halter übergibt, die am Faßring selbst oder an dessen Außenbund angreifen. Die Ausrichtung ist auf einfache Weise zu erreichen, beispielsweise dadurch, daß der einzurichtende Faßring in der Vorwärmstation auf eine horizontale ebene Unterlage aufgelegt und auf dieser spannungsfrei gemacht sowie durch diese ebene Unterlage auf seine Ringebene eingerichtet wird, wobei der Einfluß der Schwerkraft ausgenutzt wird. Der Faßring kann aber auch auf die ebene Unterlage aufgedrückt werden. Die Unterlage kann als eine geschlossene Fläche oder als eine ringförmige Unterlage ausgeführt sein.

Die Erfindung beruht auf der Feststellung, daß die im Rahmen der bekannten Maßnahmen auftretenden störenden Verwindungstoleranzen an den Faßringen der fertigen Behälter, die selbst dann auftreten, wenn mit sorgfältig aussortierten, ebenen Faßringen gearbeitet wird, darauf beruhen, daß die Faßringe, die im Wege des Spritzgießens gefertigt wurden, innere Spannungen mitbringen, die sich beim bloßen Vorwärmen auslösen und Verformungen der Faßringe bewirken, und zwar auch noch beim Blasformen. Erfindungsgemäß werden die Faßringe spannungsfrei gemacht. Nach Maßgabe des Kunststoffes, aus dem solche Faßringe bestehen, sind dazu Behandlungstemperaturen und Behandlungszeiten erforderlich, die sich vom bloßen Vorwärmen, wie es für die Herstellung der stoffschlüssigen Verbindung beim Blasformen zweckmäßig ist, unterscheiden. Die erforderliche Behandlungstemperatur sowie die erforderliche Behandlungszeit kann, kunststoffabhängig, durch Versuche leicht ermittelt werden. Die Erfindung beruht fernerhin auf der Erkenntnis, daß die bloße Temperaturbehandlung nicht ausreichend ist. Es muß vielmehr noch eine Einrichtung auf die Ringebene durchgeführt werden. Dabei kann rein thermisch gearbeitet werden, indem man die Wärmebehandlung ausreichend lange bei ausreichender Temperatur durchführt und gleichzeitig die Schwerkraft wirken läßt. Man kann aber insoweit auch eine mechanische Unterstützung verwirklichen, und zwar dadurch, daß die Faßringe auf die ebene Unterlage in der Vorwärmstation aufgedrückt werden. Überraschenderweise ist es bei dem erfindungsgemäßen Verfahren nicht erforderlich, die Rundheit der im Wege des Spritzgießens hergestellten Faßringe besonders zu überprüfen und Abweichungen von der Rundheit zu korrigieren. Diese Korrektur erfolgt im Rahmen des erfindungsgemäßen Verfahrens vielmehr gleichsam von selbst, und zwar bei der Blasformung. Es versteht sich, daß dazu die Faßringe bei der Blasform noch eine ausreichend hohe Temperatur aufweisen müssen.

Gegenstand der Erfindung ist auch eine Vorrichtung für die Durchführung des beschriebenen Verfahrens. Diese ist gekennzeichnet durch einen Vorwärmofen, der einen Umlaufkettenförderer mit einer Mehrzahl von ebenen Aufnahmeeinrichtungen für die vorzuwärmenden Faßringe sowie eine Beschick- und Entleereinrichtung aufweist, wobei die Aufnahmeeinrichtungen in die Beschick- und Entleereinrichtung einbringbar sind, und gekennzeichnet durch einen Manipulator, der die spannungsfrei gemachten und eingerichteten Faßringe an ihrem Außenbund erfaßt und in die geöffnete Blasform einführt.

Im folgenden wird die Erfindung anhand einer lediglich ein Ausführungsbeispiel darstellenden Zeichnung ausführlicher erläutert. Es zeigen in schematischer Darstellung

Fig. 1 den ersten Abschnitt des erfindungsgemäßen Verfahrens bis zum Einbringen eines Faßringes in die geöffnete Blasform,

Fig. 2 die an die Darstellung in Fig. 1 anschließenden Maßnahmen bei der Herstellung des Kunststoffbehälters bis zur Entnahme des Kunststoffbehälters aus der Blasform und

Fig. 3 mit den Teilfiguren a) bis d) verschiedene Maßnahmen und Verfahrensschritte im Bereich der Vorwärmstation.

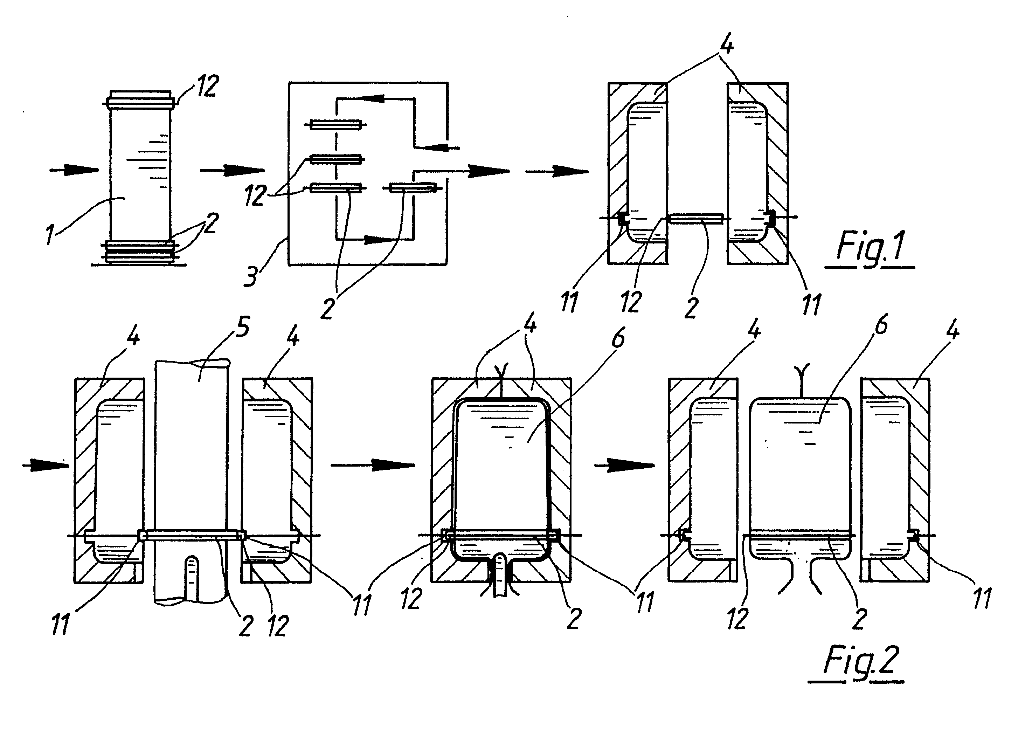

In der Fig. 1 erkennt man von links nach rechts eine zylindrische Stapeleinrichtung 1 für eine Vielzahl von unsortierten Faßringen 2, die Vorwärmstation 3 und die Blasform 4, die als eine zweiteilige Blasform ausgeführt ist. Die einzelnen Faßringe 2 sind unsortiert. Sie werden von der Stapeleinrichtung 1 abgenommen, in die Vorwärmstation 3 eingeführt und im ebenen Zustand auch in die geöffnete Blasform 4 verbracht.

Die Fig. 2 zeigt wiederum von links nach rechts die geöffnete Blasform 4 mit einem einliegenden Faßring 2 und den Kunststoffschlauch 5, der in die geöffnete Blasform 4 eingeführt und durch den Faßring hindurchgeführt wird. Nach rechts schließt in Fig 2 die geschlossene Blasform 4 an, und zwar beim Blasvorgang. Es versteht sich, daß in der Blasform 4 auch eine ausreichende Abkühlung erfolgt, damit, wie die nächste Figur rechts zeigt, bei wieder geöffneter Blasform 4 der fertige Kunststoffbehälter 6 mit dem Faßring 2 herausgenommen werden kann.

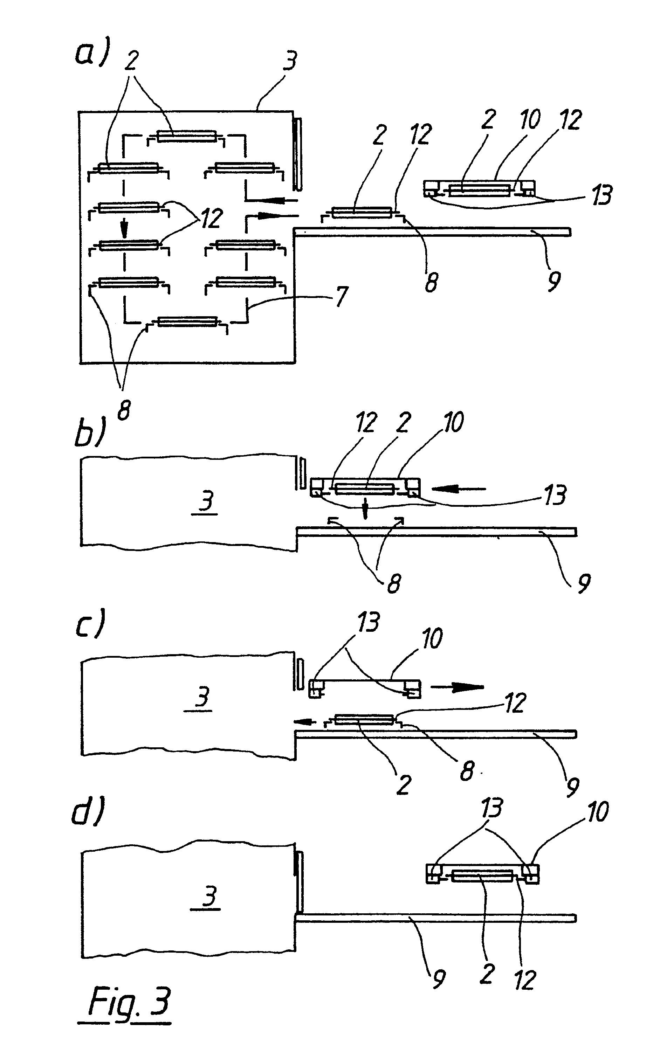

In der Fig. 3 mit den Teilfiguren a) bis d) erkennt man bauliche Einzelheiten der Vorwärmstation 3, nämlich einen Vorwärmofen, der einen umlaufenden Kettenförderer 7 mit einer Mehrzahl von ebenen Aufnahmeeinrichtungen 8 für die vorzuwärmenden Faßringe 2 sowie eine Beschick- und Entleereinrichtung 9 aufweist. Die Aufnahmeeinrichtungen 8 sind von einem Manipulator 10 bedienbar, der die einzelnen Faßringe 2 auch in die Blasform 4 einführt, aber auch zuführt.

Eine vergleichende Betrachtung aller Figuren läßt das erfindungsgemäße Verfahren zur Herstellung eines Kunststoffbehälters 6 durch Blasformen eines Schlauchabschnittes aus thermoplastischem Kunststoff erkennen, wobei zunächst ein Schlauch 5 in eine geteilte, geöffnete Blasform 4 eingeführt, die Blasform 4 geschlossen und in den in der Blasform 4 abgequetschten Schlauchabschnitt Druckluft eingeführt wird, wobei zuvor in die geöffnete Blasform 4, die geeignete Aufnahmehalter 11 aufweist, zumindest ein einteiliger Faßring 2 aus thermoplastischem Kunststoff eingebracht wurde, der im Wege des Spritzgießens hergestellt wurde. Dieser Faßring 2 wird bei der Blasformgebung des Behälters 6 mit diesem form- und/oder stoffschlüssig verbunden. Erfindungsgemäß wird dabei mit unsortierten Faßringen 2 gearbeitet, die einen Außenbund 12 aufweisen. Diese Faßringe 2 werden in die Vorwärmstation 3 eingeführt und in dieser spannungsfrei gemacht sowie gleichzeitig auf ihre vorgegebene Ringebene eingerichtet. Die spannungsfreien und eben eingerichteten Faßringe 2 werden an ihrem Außenbund 12 von dem Manipulator 10 ergriffen, dessen Greifer 13 in einer der Ringebene entsprechenden Ebene liegen. Der Manipulator 10 führt den jeweiligen Faßring 2 in die geöffnete Blasform 4 ein. Er übergibt die Faßringe 2 an in der Blasform verschiebbare Halter 11, die am Faßring 2 selbst oder an dessen Außenbund 12 angreifen. Man erkennt insbes. in der Fig. 3, daß die Faßringe 2 in der Vorwärmstation 3 auf ebene Aufnahmeeinrichtungen 8 aufgelegt und auf diesen spannungsfrei gemacht sowie durch diese auf ihre Ringebene eingerichtet werden. Nicht gezeichnet wurde, daß dabei in der Vorwärmstation 3 auch ein Druck auf die Faßringe 2 ausgeübt werden kann.

## Ansprüche

1. Verfahren zur Herstellung eines Kunststoffbehälters durch Blasformen eines Schlauchabschnittes aus thermoplastifiziertem Kunststoff, -

wobei ein Schlauch in eine geteilte, geöffnete Blasform eingeführt, die Blasform geschlossen und in den in der Blasform abgequetschten Schlauchabschnitt Druckluft eingeführt wird,

wobei fernerhin in die geöffnete Blasform, die geeignete Aufnahmen aufweist, zumindest ein einteiliger Faßring aus thermoplastischem Kunststoff, der im Wege des Spritzgießens mit Verwindungstoleranzen behaftet hergestellt wurde, eingelegt wird und dieser bei der Blasformgebung des Behältermantels mit diesem form- und/oder stoffschlüssig verbunden wird, **dadurch gekennzeichnet**, daß ein unsortierter Faßring, der einen Außenbund aufweist, dem Verfahren zugeführt und in eine Vorwärmstation eingeführt wird, in der er spannungsfreigemacht und gleichzeitig auf seine vorgegebene Ringebene eingerichtet wird, und daß der spannungsfreie und eingerichtete Faßring an seinem Außenbund mit einem Manipulator ergriffen wird, dessen Greifer in einer der Ringebene entsprechenden Ebene liegen, und daß der Manipulator den Faßring in die geöffnete Blasform einführt sowie an in der Blasform verschiebbare Kalter übergibt, die am Faßring selbst oder an dessen Außenbund angreifen.

2. Verfahren nach Anspruch 1, dadurch gekennzeichnet, daß der Faßring in der Vorwärmstation auf eine ebene Unterlage aufgelegt und auf dieser spannungsfrei gemacht sowie durch diese auf seine Ringebene eingerichtet wird.

3. Verfahren nach einem der Ansprüche 1 oder 2, dadurch gekennzeichnet, daß der Faßreifen auf die ebene Unterlage aufgedrückt wird.

4. Verfahren nach einem der Ansprüche 1 bis 3, dadurch gekennzeichnet, daß in der Vorwärmstation gleichzeitig mehrere Faßreifen behandelt werden, die in unterschiedlicher Zeitfolge in die Vorwärmstation eingeführt und entsprechend herausgenommen werden.

5. Vorrichtung für die Durchführung des Verfahrens nach einem der Ansprüche 1 bis 4, **gekennzeichnet durch** einen Vorwärmofen (3), der einen Umlaufkettenförderer (7) mit einer Mehrzahl von ebenen Aufnahmeeinrichtungen (8) für die vorzuwärmenden Faßringe (2) sowie eine Beschick- und Entleereinrichtung (9) aufweist, wobei die Aufnahmeeinrichtungen (8) in die Beschick- und Entleereinrichtung (9) einbringbar sind, und gekennzeichnet durch einen Manipulator (10), der die spannungsfrei gemachten und eingerichteten Faßringe (2) an ihrem Außenbund (12) erfaßt und in die geöffnete Blasform (4) einführt.

## Claims

1. A process for the manufacture of a synthetic material container by blow-forming a cut-off length of tubing of thermoplasticized synthetic material, in which a length of tubing is inserted into a divided, opened blow-mould, the blow-mould is closed and compressed air is injected into the length of tubing that is squeezed in the blow-mould, in which also at least one one-piece hoop ring of thermoplastic synthetic material manufactured by injection moulding and subject to distortion defects is inserted into the opened blow-mould that possesses suitable receptors and when the container wall is blow-formed becomes integrated therewith in shape and/or material, characterized in that an uninspected hoop ring that possesses an external collar is fed in for processing and is introduced into a preheating station in which it is relieved of internal stresses and at the same time is set to produce its specified annular flat surface, that the stress-free and corrected hoop ring is grasped by its external collar by a manipulator the gripping devices of which lie in a plane corresponding to the annular flat surface, and that the manipulator transfers the hoop ring in the opened blow-mould to holders, movable in the blow-mould, that engage with the hoop ring itself or with its external collar.

2. A process according to Claim 1, characterized in that the hoop ring is placed on a flat base support in the preheating station on which it is relieved of stresses and by which it is set to produce its annular flat surface.

3. A process according to one of Claims 1 or 2, characterized in that the hoop ring is pressed down against the flat base support.

4. A process according to one of Claims 1 to 3, characterized in that several hoop rings are simultaneously handled in the preheating station, being introduced into it at various intervals of time and removed from it similarly.

5. Equipment for performing the process according to one of Claims 1 to 4, characterized by a preheating oven (3) that possesses a circulating chain conveyor (7) with a number of flat reception appliances (8) for the hoop rings (2) to be preheated and a loading and unloading equipment (9), in which the reception appliances (8) are insertable onto the loading and unloading equipment (9), and characterized by a manipulator (10) that grasps the hoop rings (2), relieved of internal stresses and corrected, by their external collars (12) and introduces them into the opened blow-mould (4).

## Revendications

1. Procédé pour la fabrication d'un récipient en matière plastique par moulage par soufflage d'une section de tuyau en matière thermoplastifiée, un tuyau étant introduit dans un moule de soufflage subdivisé et ouvert, le moule de soufflage étant fermé et de l'air comprimé étant injecté dans la section de tuyau écrasée dans le moule de soufflage, au moins une bague d'entourage en matière thermoplastique réalisée par moulage par injection avec des tolérances de déformation étant insérée, en outre, dans le moule de soufflage ouvert qui comporte des évidements appropriés et rattachée, lors du formage par soufflage de l'enveloppe du récipient, à engagement positif et/ou à joint intégré à ladite enveloppe du récipient, **caractérisé par le fait** qu'une bague d'entourage non sélectionnée au moyen d'un tri et munie d'un collet extérieur est utilisée pour le processus et introduite dans un poste de préchauffage dans lequel elle est amenée à l'état exempt de contraintes et placée en même temps dans son plan prédéterminé ; que la bague d'entourage exempte de contraintes et alignée est saisie, au niveau de son collet extérieur, par un manipulateur dont les organes de préhension se situent dans un plan qui correspond au plan de la bague ; et que le manipulateur introduit la bague d'entourage dans le moule de soufflage ouvert et la transmet à des organes de retenue déplaçables dans le moule de soufflage et agissant sur la bague d'entourage elle-même ou sur son collet extérieur.

2. Procédé selon la revendication 1, caractérisé par le fait que la bague d'entourage est déposée sur un support plat dans le poste de préchauffage sur lequel les contraintes existant dans la bague sont éliminées et qui règle ladite bague dans son plan.

3. Procédé selon l'une des revendications 1 ou 2, caractérisé par le fait que la bague d'entourage est appliquée contre le support plat.

4. Procédé selon l'une des revendications 1 à 3, caractérisé par le fait que dans le poste de préchauffaqe plusieurs bagues d'entourage sont traitées simultanément, insérées selon des séquences temporelles différentes dans le poste de préchauffage et extraites d'une manière analogue.

5. Dispositif pour la mise en oeuvre du procédé selon l'une des revendications 1 à 4, **caractérisé par le fait** qu'il comprend un four de préchauffage (3) qui comporte un élévateur transporteur à plateaux-supports (7) avec une pluralité de dispositifs de réception (8) pour les bagues d'entourage (2) devant être préchauffées, ainsi qu'un dispositif de chargement et de déchargement (9), les dispositifs de réception (8) pouvant être insérés dans le dispositif de chargement et de déchargement (9) ; et qu'il comprend un manipulateur (10) qui saisit les bagues d'entourage (2) alignées et dont les contraintes ont été supprimées, au niveau de leur collet extérieur (12) et les introduit dans le moule de soufflage (4) ouvert.

_Fig.1_

_Fig.2_

EP 0 323 548 B1

a)

b)

c)

d)

Fig. 3